# EUROPEAN PATENT APPLICATION

(11) **EP 4 813 728 A1**
(43) Date of publication of application: **30.09.2026**
(21) Application number: 25167192.1
(22) Date of filing: 28.03.2025
(51) Int. Cl.: B60L 53/10, B60L 53/14, B60L 53/67, H02J 7/00

(54) **CHARGING SYSTEM FOR ELECTRIC VEHICLES**

(71) Applicant: APS Applied Power Systems AG, 4626 Niederbuchsiten (CH)
(72) Inventor: Berger, Stefan, 8450 Andelfingen (CH); Meier, André, 4715 Herbetswil (CH); Nick, Andreas, 4600 Olten (CH)
(74) Representative: Keller Schneider Patent- und Markenanwälte AG

(57) **Abstract**

A charging system (100) for electric vehicles comprises at least one satellite module group comprising a plurality of satellite modules (140.1...140.10), each satellite module (140.1...140.10) providing a charging connection (146.1...146.10) for a vehicle and each satellite module (140.1...140.10) comprising at least two DC supply terminals (142.1...142.10, 143.1...143.10) which can be connected to or disconnected from the charging connection (146.1...146.10) independently of one another by means of switching elements (144.1...144.10, 145.1...145.10) in the satellite module (140.1...140.10). The charging system (100) further comprises a plurality of power supply modules (130.1.1...130.8.2) with power converters, for providing DC charging current. First power supply modules (130.1.1...130.5.3) of a first group are each connected to exactly one first terminal (142.1...142.10) of an associated satellite module (140.1...140.10). Second power supply modules (130.6.1...130.8.1) of a second group are connected to a plurality of second terminals (143.3...143.6, 143.8...143.10) of a plurality of satellite modules (140.3...140.6, 140.8...140.10), so that at least one satellite module (140.3...140.6, 140.8...140.10) is connected via its first connection (142.3....142.6, 142.8...142.10) to at least one of the first power supply modules (130.1.1...130.5.3) and via its second connection (143.3...143.6, 143.8...143.10) to at least one of the second power supply modules. The charging system (100) is controlled so that the connection between the second feed connection (143.3...143.6, 143.8...143.10) and the charging connection (146.3...146.6, 146.8...146.10) is established for a maximum of one satellite module (140.3...140.6, 140.8...140.10) of the respective satellite module group. At least one satellite module (140.3...140.6, 140.8...140.10) is supplied simultaneously by both power supply modules (130.1.1...130.8.1) in the corresponding operating state and provides a maximum charging power which essentially corresponds to the sum of the two maximum charging powers of the first and second power supply modules (130.1.1....130.8.1).

## Description

### Technical field

The invention relates to a charging system for electric vehicles. It further relates to a method for operating a charging system for electric vehicles.

### Background art

Charging systems providing a plurality of charging connections for charging electric vehicles are known. Depending on the type of vehicles to be charged, the present state of charge (SoC), the temperature of the battery to be charged and further parameters the charging power that can be supplied at a given charging connection can vary greatly. If the maximum potential charging power has to be made continuously available at each charging connection, a large number or particularly powerful power supplies are required, which increases cost and need for space.

As it is very unlikely that all connected vehicles need maximum charging power at the same time, it has been proposed to provide architectures that allow for the flexible distribution of charging power from a number of power supplies to a number of charging connections. In particular, charging systems including a connection matrix allow for the flexible connection of subsets of the power supplies to certain charging connections are known, cf. e. g. EP 2 572 431 B1 (ABB BV). However, due to the high component effort, corresponding solutions are complicated and expensive.

Solutions with a lower flexibility, requiring a lower component effort thus have been proposed. DE 10 2021 120 084 A1 (Porsche) relates to a charging system comprising a group of charging stations, each of them comprising a power electronics assembly with two power electronics devices. In addition, the charging system includes further power electronics assemblies, each having two power electronics devices. The latter can each be connected to the respective power electronics assembly of two charging stations using cable assemblies. This reduces the complexity of the switching components. However, the flexibility of the system is also greatly reduced and there are situations where the available charging power may not be optimally distributed to the charging connections.

### Disclosure of the invention

The object of the invention is to provide a charging system for electric vehicles that allows for a flexible distribution of charging power with simple switching components.

The solution to the problem is defined by the features of claim 1. According to the invention, the charging system comprises:
a) at least one satellite module group comprising a plurality of satellite modules, each satellite module providing a charging connection for a vehicle and each satellite module comprising at least two DC supply terminals which can be connected to or disconnected from the charging connection independently of one another by means of switching elements in the satellite module; and
b) a plurality of power supply modules with power converters, for providing DC charging current.

First power supply modules of a first group are each connected to exactly one first supply terminal of an associated satellite module. Second power supply modules of a second group are connected to a plurality of second supply terminals of a plurality of satellite modules. Accordingly, at least one satellite module is connected via its first supply terminal to at least one of the first power supply modules and via its second supply terminal to at least one of the second power supply modules.

The charging system is controlled so that the connection between the second supply terminal and the charging connection is established for a maximum of one satellite module of the respective satellite module group.

At least one satellite module is supplied simultaneously by both power supply modules in the corresponding operating state and provides a maximum charging power that essentially corresponds to the sum of the two maximum charging powers of the first and second power supply modules.

The charging system is suitable to be provided at a public charging station, e.g. for charging electric cars, delivery trucks, etc. However, it is particularly suited for charging commercial vehicles of a fleet of commercial vehicles. e. g. delivery trucks of a delivery provider, buses of a public transport provider, etc. as it is typical in those applications that various similar or different vehicles need to be charged in parallel, wherein the state of charge and the required energy to be charged often differ significantly from vehicle to vehicle and where the individual requirements are centrally known, e. g. from a fleet management system. The inventive charging system provides additional flexibility, which allows for in increased charging efficiency across the entire fleet.

Two or more power supply modules of the first group may be connected to the same DC supply terminal of a given satellite module. However, each of the power supply modules of the first group will only be connected to a single first supply terminal, i. e. the number of power supply modules will be the same or larger than the number of satellite modules supplied by these power supply modules.

In contrast, more than one satellite module is connected to the same power supply module of the second group or to a given subgroup of power supply modules of the second group. In particular, the power supply modules of such a subgroup are connected in parallel, wherein the connection is located close to the power supply modules such that only a single line is required between the site of the connection and the power supply modules supplied by this subgroup. The power supply modules of the second group allow for selectively increasing the charging power for individual satellite modules, e.g. if a vehicle connected to the respective satellite module has a state-of-charge (SoC) which allows for charging with high charging power or if a vehicle needs to be charged as fast as possible. In the following, the individual selective increase in charging power will also be referred to as "boosting".

The power supply modules may be AC/DC or DC/DC converters, depending on the available supply of electrical energy. In addition to the converter, they usually include control and monitoring components, terminals or sockets or hard-wired interconnections.

The charging connections provided at the satellite modules may be sockets, pantographs that may be moved to contact charging surfaces at a vehicle, e.g. in the roof section of the vehicle, or other kinds of contacts that allow for the transmission of electrical energy.

The charging system according to the invention allows for an increased flexibility in meeting different and time-dependent charging requirements of several vehicles simultaneously charged by the system. At the same time, its design is rather simple, which reduces costs compared to more complicated systems, including e.g. a switching matrix or similar, and which reduces the error rate.

Preferably, each of the plurality of satellite modules is assigned to one satellite module group of a plurality of satellite module groups, wherein the second supply terminals of all satellite modules assigned to a given group (boosting group) are connected to respective of the second power supply modules in parallel, wherein the charging system is controlled so that the connection between the second supply terminal and the charging connection is established for a maximum of one satellite module per satellite module group.

Having more than one satellite module groups allows for boosting more than one satellite module at the same time. Nevertheless, it is preferred that the connections between the power supply modules and the supply terminals of the satellite modules are hard-wired and that no or essentially no switches are required between the power supply modules and the supply terminals of the satellite modules to keep complexity and expense down.

Alternatively, the system includes only a single boosting group as well as potentially further satellite modules that are not connected to boosting power supplies.

In a preferred embodiment, at least two second power supply modules are connected to each other, creating a ring line, wherein at least two of the satellite modules are connected to the ring line. Using a ring line allows for reducing the current in the lines connecting a power supply module with a satellite module or a plurality of satellite modules. Accordingly, smaller wire cross-sections are required. Furthermore, the ring line may be interrupted at a later point in time if the system shall be upgraded.

Preferably, at least one of the second supply terminals may be provided with a higher maximum charging power than each of the first supply terminals. This allows for providing a moderate base charging power which will always be available at each of the satellite modules (e. g. for slow-charging of vehicles in off peak times or for charging vehicles in SoC ranges which do not allow for high charging power) and a larger boosting charging power which may be selectively assigned to individual vehicles (e. g. vehicles with exceptional requirements with respect to charging energy and/or speed).

In alternative embodiments, the boosting charging power corresponds to the base charging power or is even lower than the base charging power.

Preferably, the at least one of the second supply terminals may be provided a maximum charging power that is at least two times the maximum charging power provided to each of the first supply terminals

For instance, in a charging system for charging buses for public transport, the base charging power provided to the first supply terminals may be about 30-100 kW, whereas the boosting power selectively activated in individual satellite modules are about 80-200 kW. Therefore, the "boosted power" that is available for charging certain vehicles in certain time intervals may be as high as 300 kW. As a matter of course, these values will be chosen to match the characteristics of the vehicles in the fleet to be charged as well as to characteristics of the operation of this fleet.

Alternatively, the maximum charging power that is supplied to a given second supply terminal matches the charging power provided to the first supply terminal or is lower than the charging power provided to the first supply terminal.

Preferably, each of the satellite modules comprises an insulation monitoring device for measuring an insulation resistance at the charging connection provided by the satellite module. The insulation monitoring device is used to check the minimum insulation resistance during the charging process. The vehicle-side insulation monitoring is deactivated during the charging process. If the insulation resistance drops below the minimum resistance, the charging process is automatically stopped by cutting the switching elements in the respective satellite module.

In addition, the satellite modules may include further sensor components, such as a voltage sensor. This voltage sensor ensures that the voltage at the vehicle plug, the pantograph or a further contacting device providing the charging connector may be directly measured to ensure that supply voltage is within a predetermined range.

Preferably, the switching elements of at least one of the satellite modules comprise at least two bipolar switches for selectively connecting or disconnecting the at least two DC supply terminals to the charging connection.

Using bipolar switches for both connections enhances operation safety of the system. They allow for securely cutting all conductive connections between the supply terminals and the charging connection (and thus the connection between any of the power supply modules and the vehicle connected to the charging connection of the respective satellite module).

In a preferred embodiment, at least two of the plurality of power supply modules are mounted in a common power supply unit, wherein the power supply unit includes a mounting structure for the at least two power supply modules. Power supply units accommodating several (e.g. 2, 3 or 4) power supply modules enhance the modularity of the system. Despite the preferred "hard-wiring" of the power supply modules with the satellite modules, several configurations may be achieved with essentially the same components.

In preferred embodiments, at least one first supply terminal of a satellite module power supply unit is connected in parallel to two power supply modules mounted in different power supply units. This further enhances the flexibility. In principle, a variety of configurations are possible. Three examples are listed in the following, wherein a cabinet hosts a number of power supply units, each power supply unit including a number of power supply modules. Groups of those power supply modules are connected in parallel and to a given first supply terminal (or a group of second supply terminals) of satellite modules:

### Example 1

| **Cabinet** | **Unit** | **Supply Module** | **Satellite Module** | **Terminal** |
|---|---|---|---|---|
| 1 | 1.1 | 1.1.1 | S1 | T1 |
| | | 1.1.2 | | |
| | | 1.1.3 | S2 | T1 |
| | 1.2 | 1.2.1 | | |
| | | 1.2.2 | S3 | T1 |
| | | 1.2.3 | | |
| | 1.3 | 1.3.1 | S4 | T1 |
| | | 1.3.2 | | |
| | | 1.3.3 | - | - |
| 2 | 2.1 | 2.1.1 | S5 | T1 |
| | | 2.1.2 | S6 | T1 |
| | | 2.1.3 | S7 | T1 |
| | 2.2 | 2.2.1 | S8 | T1 |
| | | 2.2.2 | S9 | T1 |
| | | 2.2.3 | S10 | T1 |
| 3 | 3.1 | 3.1.1 | S3, S4, S5, S6 | T2 |
| | | 3.1.2 | | |
| | | 3.1.3 | | |
| | 3.2 | 3.2.1 | S8, S9, S10 | T2 |
| | | 3.2.2 | | |
| | | 3.2.3 | | |
| 3.3 | | 3.3.1 | | |
| | | 3.3.2 | - | - |
| | | 3.3.3 | - | - |

In this example, some of the power supply modules (1.3.3, 3.3.2, 3.3.3) are not used. Whereas the satellite modules 3, 4, 5, 6 (boost group 1) may be boosted by the power supply unit 3.1, and the satellite modules 7, 8, 9, 10 (boost group 2) may be boosted by the power supply units 3.2 and 3.3, the satellite modules 1, 2, and 7 are not boostable. Due to the different numbers of charging modules connected in parallel, the base and boost powers at different satellite modules may be different.

### Example 2

| **Cabinet** | **Unit** | **Supply Module** | **Satellite Module** | **Terminal** |
|---|---|---|---|---|
| 1 | 1.1 | 1.1.1 | S1 | T1 |
| | | 1.1.2 | | |
| | | 1.1.3 | S2 | T1 |
| | 1.2 | 1.2.1 | | |
| | | 1.2.2 | S3 | T1 |
| | | 1.2.3 | | |
| 2 | 2.1 | 2.1.1 | S4 | T1 |
| | | 2.1.2 | | |
| | | 2.1.3 | S5 | T1 |
| | 2.2 | 2.2.1 | | |
| | | 2.2.2 | S6 | T1 |
| | | 2.2.3 | | |
| 3 | 3.1 | 3.1.1 | S1, S2 | T2 |
| | | 3.1.2 | | |
| | | 3.1.3 | | |
| | 3.2 | 3.2.1 | S3, S4 | T2 |
| | | 3.2.2 | | |
| | | 3.2.3 | | |
| | 3.3 | 3.3.1 | S5, S6 | T2 |
| | | 3.3.2 | | |
| | | 3.3..3 | | |

This example represents a symmetric architecture, where each of the satellite modules is supplied by two power supply modules and may be boosted by three power supply modules.

### Example 3

| **Cabinet** | **Unit** | **Supply Module** | **Satellite Module** | **Terminal** |
|---|---|---|---|---|
| 1 | 1.1 | 1.1.1 | S1 | T1 |
| | | 1.1.2 | | |
| | | 1.1.3 | S2 | T1 |
| | 1.2 | 1.2.1 | | |
| | | 1.2.2 | S3 | T1 |
| | | 1.2.3 | | |
| | 1.3 | 1.3.1 | | |
| | | 1.3.2 | | |
| | | 1.3.3 | | |
| 2 | 2.1 | 2.1.1 | S4 | T1 |
| | | 2.1.2 | | |
| | | 2.1.3 | S5 | T1 |
| | 2.2 | 2.2.1 | | |
| | | 2.2.2 | S6 | T1 |
| | | 2.2.3 | | |
| 3 | 3.1 | 3.1.1 | S4, S5, S6 | T2 |
| | | 3.1.2 | | |
| | | 3.1.3 | | |
| | 3.2 | 3.2.1 | | |
| | | 3.2.2 | | |
| | | 3.2.3 | | |

In this example, there is only one boost group, including satellite modules S4, S5, S6. S3 is a high-speed charger, whereas S1 and S2 provide only the base charging power, e.g. for the overnight charging of commercial vehicles.

A method for operating a charging system for electric vehicles according to the invention comprises a step of increasing a charging power supplied at a charging connection of a satellite module, a first supply terminal of the satellite module being connected to a first power supply module of a first group of power supply modules. The step comprises the substeps of:
a) checking whether a power supply module or a subgroup of power supply modules of a second group of power supply modules, being connected to a second supply terminal of the satellite module, is available;
b) if the module or subgroup is available, starting up the available module or subgroup until a predetermined voltage is provided;
c) closing a switching element in the satellite module connecting the second supply terminal of the satellite module or subgroup to the charging connection of the satellite module.

Therefore, for each satellite module connected to at least one power supply module of the second group, there are at least two operating states:
I) base charging: the satellite module is supplied by the fixedly assigned power supply modules, the switching element between the second supply terminal and the charging connection is open;
II) boosted charging: the satellite module is supplied in parallel by the assigned power supply modules and the connected power supply modules of the second group, the switching element between the second supply terminal and the charging connection is closed.

The step of increasing the charging power may be triggered in several ways:
a) manually by the user of the vehicle to be charged, using an interface element (button, touch screen, etc.) provided at the satellite module or through a wireless connection (e. g. using a tablet or smartphone directly or indirectly connected to a control system of the charging system or by a user interface provided by the vehicle itself);
b) automatically by the control system of the charging system; in particular, the charging system collects relevant parameters from the vehicles and/or vehicle operators, such as SoC, maximum charging power, desired charging speed, desired charging energy, etc., and prioritizes the vehicles within a given boosting group; this may include the definition of a charging schedule according to which the boosting power modules are connected with the individual satellite modules of the group;
c) automatically by a localized controller for the boosting group; the process is basically the same as that in option b), however each boosting group autonomously receives and processes the data.

Manual as well as automatic requests may be possible in a given system, wherein the priority of the different kinds of requests will have to be defined and to be taken into account when selecting the satellite module(s) to be boosted at a given point in time. The determination of the boosting configuration may be repeated at given intervals or if a change of a relevant parameter is detected, e.g. if a vehicle stops the respective charging process or if a new vehicle is connected.

In cases where it is determined in step b) that the relevant power supply module or subgroup of power supply modules is still in use, the system may be controlled either to switch over boosting to another satellite module or to end the requested change. In the first case, prior to closing the switching element in the new satellite module, the switching element in the presently boosted satellite module is opened. Preferably, after opening, the availability is checked again, according to step b) in order to ensure that never two satellite modules in the same group are switched into booster mode.

Preferably, in step b), the module is considered available if a present output current for the module is zero

Further advantageous embodiments and combinations of features of the invention result from the following exemplary embodiments and the set of patent claims as a whole.

The drawings used to illustrate the exemplary embodiments show:
- Fig. 1: a block diagram of a first embodiment of a charging system according to the invention;
- Fig. 2: a block diagram of a second embodiment of a charging system according to the invention;
- Fig. 3: a block diagram of a third embodiment of a charging system according to the invention;
- Fig. 4: a block diagram illustrating the control and communication within a charging system according to the invention; and
- Fig.5: a block diagram illustrating the control and communication within a variant of the charging system according to the invention.

In general, identical parts are marked with the same reference symbols in the figures.

### Ways to carry out the invention

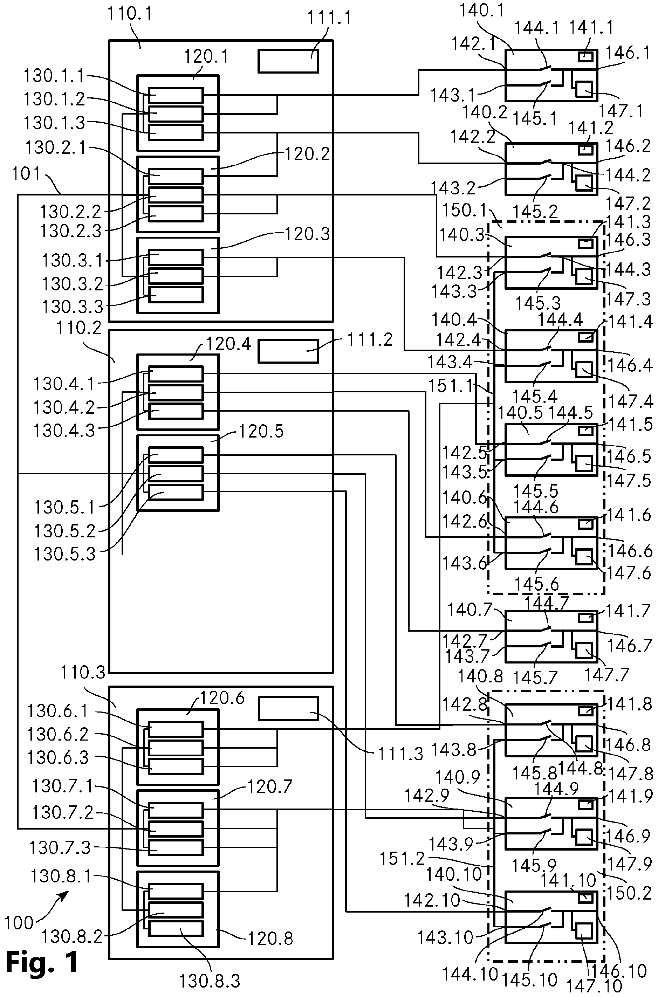

Figure 1 is a block diagram of a first embodiment of a charging system according to the invention. The charging system 100 includes provides 10 charging connections 146.1...10 for connecting vehicles to be charged. Each of the connections 146.1...10 is provided at a satellite module 140.1...10. The satellite modules are powered by 21 power supply modules 130.1.1, 130.1.2, 130.1.3, 130.2.1, 130.2.2, 130.2.3, 130.3.1, 130.3.2, 130.4.1, 130.4.2, 130.4.3, 130.5.1, 130.5.2, 130.5.3, 130.6.1, 130.6.2, 130.6.3, 130.7.1, 130.7.2, 130.7.3, 130.8.1. These power supply modules are grouped by three in power supply units 120.1...8, wherein the power supply unit 120.8 includes three power supply modules 130.8.1, 130.8.2, 130.8.3, like all the other power supply units 120.1...7 but in this embodiment only one of those is actually used. Similarly, the third power supply unit 130.3.3 of the third power supply unit 120.3 is not used in this embodiment.

Three power supply units 120.1, 120.2, 120.3 are housed in a first cabinet 110.1. Two further power supply units 120.4, 120.5 are housed in a second cabinet 110.2. Three further power supply units 120.6, 120.7, 120.8 are housed in a third cabinet 110.3. Each of the cabinets 110.1...3 includes a control unit 111.1, 111.2, 111.3. All power supply units 120.1...7 and thus all power supply modules are supplied by 3x400 VAC power by a supply network 101.

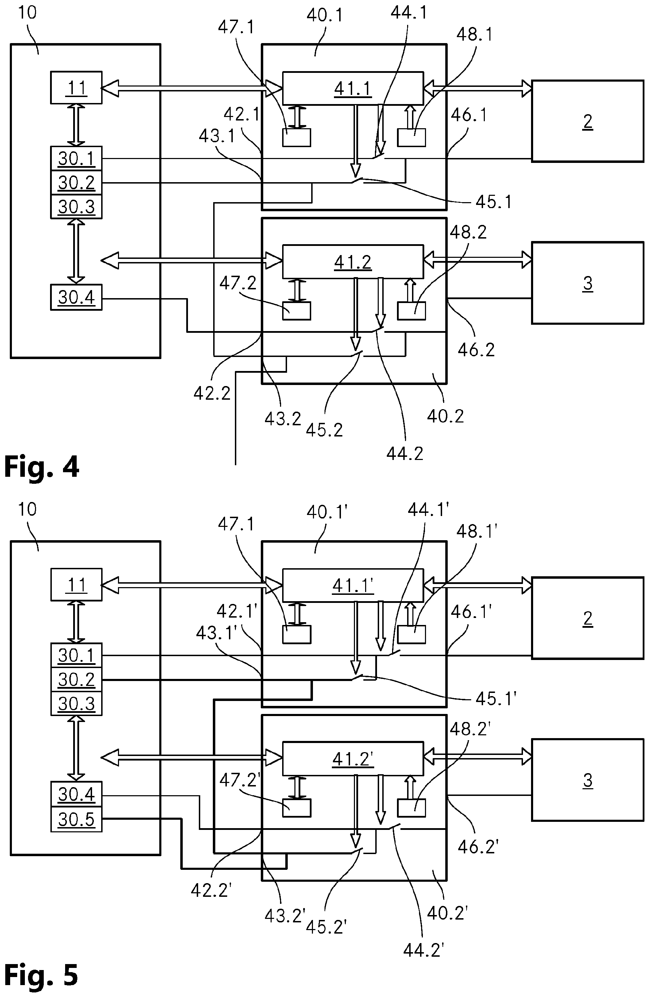

Each satellite module 140.1...10 includes at control unit 141.1...10, two supply terminals 142.1...10, 143.1...10, a charging connection 146.1...10, a first switch 144.1...10 in the connection between the first supply terminal 142.1...10 and the charging connection 146.1...10, and a second switch 145.1...10 in the connection between the second terminal 143.1...10 and the charging connection 146.1...10. The satellite module 140.1...10 further comprises an insulation monitoring device 147.1...10. Basically, the satellite module 140.1...10 allows for selectively connecting the first terminal 142.1...10 and/or the second terminal 143.1...10 with the charging connection 146.1...10, where the connections are connected in parallel of both switches 144.1...10, 145.1...10 are closed. The functioning of the components of the satellite module 140.1...10 is described in more detail below, in connection with Fig. 4.

In the embodiment shown in Fig. 1, the power supply units 130.1.1...8.1 are connected to the satellite modules' supply terminals 142.1...10, 143.1...10 as follows:

| **Cabinet** | **Power Supply Unit** | **Power Supply Module** | **Satellite Module** | **Terminal** |
|---|---|---|---|---|
| 110.1 | 120.1 | 130.1.1 | 140.1 | 142.1 |
| | | 130.1.2 | | |
| | | 130.1.3 | 140.2 | 142.2 |
| | 120.2 | 130.2.1 | | |
| | | 130.2.2 | 140.3 | 142.3 |
| | | 130.2.3 | | |
| | 120.3 | 130.3.1 | 140.4 | 142.4 |
| | | 130.3.2 | | |
| | | 130.3.3 | - | - |
| 110.2 | 120.4 | 130.4.1 | 140.5 | 142.5 |
| | | 130.4.2 | 140.6 | 142.6 |
| | | 130.4.3 | 140.7 | 142.7 |
| | 120.5 | 130.5.1 | 140.8 | 142.8 |
| | | 130.5.2 | 140.9 | 142.9 |
| | | 130.5.3 | 140.10 | 142.10 |
| 110.3 | 120.6 | 130.6.1 | 140.3 | 143.3 |
| | | 130.6.2 | 140.4 | 143.4 |
| | | 130.6.3 | 140.5 | 143.5 |
| | | | 140.6 | 143.6 |
| 120.7 | | 130.7.1 | 140.8 | 143.8 |
| | | 130.7.2 | 140.9 | 143.9 |
| | | 130.7.3 | 140.10 | 143.10 |
| 120.8 | | 130.8.1 | | |
| | | 130.8.2 | - | - |
| | | 130.8.3 | - | - |

Accordingly, the second terminals 143.1, 143.2, 143.7 of the first, second and third satellite module 140.1, 140.2, 140.7 are not connected. The third, fourth, fifth and sixth satellite module 140.3...6 are all connected to the same power supply modules 130.6.1...3 by a DC bus 151.1 and therefore constitute a first boost group 150.1. The eighth, ninth and tenth satellite module 140.8., 140.9, 140.10 are all connected by a DC bus 151.2 to the same power supply modules 130.7.1, 130.7.2, 130.7.3, 130.8.1 and therefore constitute a second boost group 150.2.

Each of the power supply modules has a maximum supply power of 40 kW. The charging power that is made available at the ten charging ports is as follows:

| **charging port** | **without boost** | **with boost** |
|---|---|---|
| 146.1 | 80 kW | *no boost available* |
| 146.2 | 80 kW | *no boost available* |
| 146.3 | 80 kW | 200 kW |
| 146.4 | 80 kW | 200 kW |
| 146.5 | 40 kW | 160 kW |
| 146.6 | 40 kW | 160 kW |
| 146.7 | 40 kW | *no boost available* |
| 146.8 | 40 kW | 200 kW |
| 146.9 | 40 kW | 200 kW |
| 146.10 | 40 kW | 200 kW |

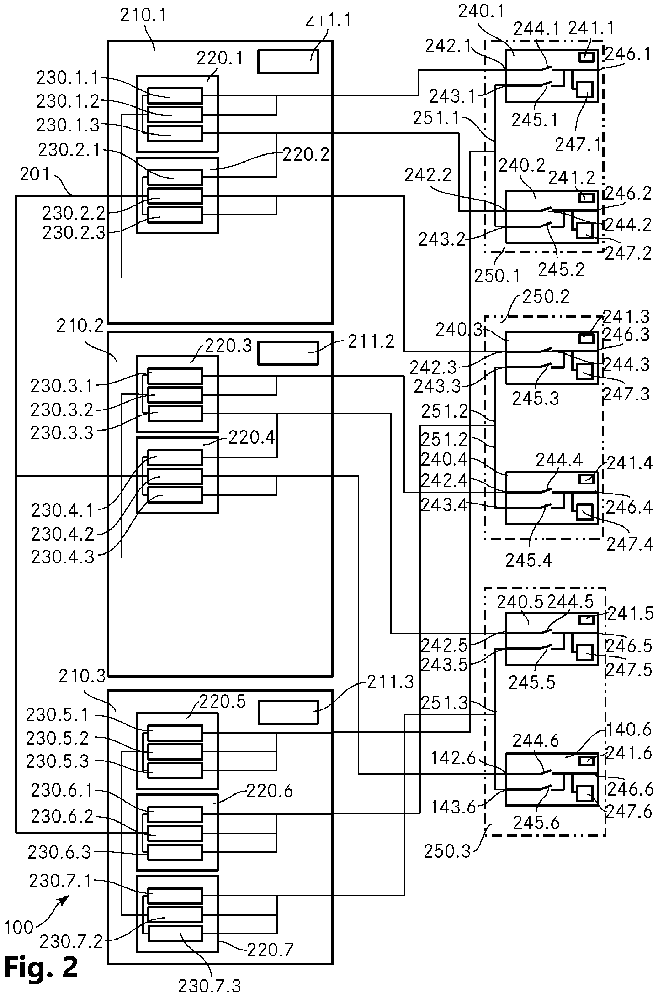

Figure 2 is a block diagram of a second embodiment of a charging system according to the invention. The charging system 200 includes provides 6 charging connections 246.1...6 for connecting vehicles to be charged. Each of the connections 246.1...6 is provided at a satellite module 240.1...6. The satellite modules are powered by 21 power supply modules 230.1.1, 230.1.2, 230.1.3, 230.2.1, 230.2.2, 230.2.3, 230.3.1, 230.3.2, 230.3.3, 230.4.1, 230.4.2, 230.4.3, 230.5.1, 230.5.2, 230.5.3, 230.6.1, 230.6.2, 230.6.3, 230.7.1, 230.7.2, 230.7.3. These power supply modules are grouped by three in power supply units 220.1...7.

Two power supply units 220.1, 220.2 are housed in a first cabinet 210.1. Two further power supply units 220.3, 220.4 are housed in a second cabinet 210.2. Three further power supply units 220.5, 220.6, 220.7 are housed in a third cabinet 210.3. Each of the cabinets 210.1...3 includes a control unit 211.1, 211.2, 211.3. All power supply units 220.1...7 and thus all power supply modules are supplied by 3x400 VAC power by a supply network 201.

Each satellite module 240.1...6 includes at control unit 241.1...6, two supply terminals 242.1...6, 243.1...6, a charging connection 246.1...6, a first switch 244.1...6 in the connection between the first supply terminal 242.1...6 and the charging connection 246.1...6, and a second switch 245.1...6 in the connection between the second terminal 243.1...6 and the charging connection 246.1...6. The satellite module 240.1...6 further comprises an insulation monitoring device 247.1...6. Basically, the satellite module 240.1...6 allows for selectively connecting the first terminal 242.1...6 and/or the second terminal 243.1...6 with the charging connection 246.1...6, where the connections are connected in parallel of both switches 244.1...6, 245.1...6 are closed. The functioning of the components of the satellite module 240.1...6 is described in more detail below, in connection with Fig. 4.

In the embodiment shown in Fig. 2, the power supply units 230.1.1...7.3 are connected to the satellite modules' supply terminals 242.1...6, 243.1...6 as follows:

| **Cabinet** | **Power Supply Unit** | **Power Supply Module** | **Satellite Module** | **Terminal** |
|---|---|---|---|---|
| 210.1 | 220.1 | 230.1.1 | 240.1 | 242.1 |
| | | 230.1.2 | | |
| | | 230.1.3 | 240.2 | 242.2 |
| | 220.2 | 230.2.1 | | |
| | | 230.2.2 | 240.3 | 242.3 |
| | | 230.2.3 | | |
| 210.2 | 220.3 | 230.3.1 | 240.4 | 242.4 |
| | | 230.3.2 | | |
| | | 230.3.3 | 240.5 | 242.5 |
| | 220.4 | 230.4.1 | | |
| | | 230.4.2 | 240.6 | 242.6 |
| | | 230.4.3 | | |
| 210.3 | 220.5 | 230.5.1 | 240.1 | 243.1 |
| | | 230.5.2 | 240.2 | 243.2 |
| | | 230.5.3 | | |
| | 220.6 | 230.6.1 | 240.3 | 243.3 |
| | | 230.6.2 | 240.4 | 243.4 |
| | | 230.6.3 | | |
| 220.7 | | 230.7.1 | 240.5 | 243.5 |
| | | 230.7.2 | 240.6 | 243.6 |
| | | 230.7..3 | | |

Accordingly, the second terminals 243.1, 243.2 of the first and second satellite module 240.1, 240.2 are connected to the same power supply modules 230.5.1...3 by a DC bus 251.1 and constitute a first boost group 250.1. The second terminals 243.3, 243.4 of the third and fourth satellite module 240.3, 240.4 are connected to the same power supply modules 230.6.1...3 by a DC bus 251.2 and constitute a second boost group 250.2. Finally, the second terminals 243.5, 243.6 of the fifth and sixth satellite module 240.5, 240.6 are connected to the same power supply modules 230.7.1...3 by a DC bus 251.3 and constitute a third boost group 250.3.

Each of the power supply modules has a maximum supply power of 40 kW. The charging power that is made available at the six charging ports is as follows:

| **charging port** | **without boost** | **with boost** |
|---|---|---|
| 246.1 | 80 kW | 200 kW |
| 246.2 | 80 kW | 200 kW |
| 246.3 | 80 kW | 200 kW |
| 246.4 | 80 kW | 200 kW |
| 246.5 | 80 kW | 200 kW |
| 246.6 | 80 kW | 200 kW |

Figure 2 is a block diagram of a third embodiment of a charging system according to the invention. The charging system 300 includes provides 6 charging connections 346.1...6 for connecting vehicles to be charged. Each of the connections 346.1...6 is provided at a satellite module 340.1...6. The satellite modules are powered by 21 power supply modules 330.1.1, 330.1.2, 330.1.3, 330.2.1, 330.2.2, 330.2.3, 330.3.1, 330.3.2, 330.3.3, 330.4.1, 330.4.2, 330.4.3, 330.5.1, 330.5.2, 330.5.3, 330.6.1, 330.6.2, 330.6.3, 330.7.1, 330.7.2, 330.7.3. These power supply modules are grouped by three in power supply units 320.1...7.

Three power supply units 320.1, 320.2, 320.3 are housed in a first cabinet 310.1. Two further power supply units 320.4, 320.5 are housed in a second cabinet 310.2. Two further power supply units 320.6, 320.7 are housed in a third cabinet 310.3. Each of the cabinets 310.1...3 includes a control unit 311.1, 311.2, 311.3. All power supply units 320.1...7 and thus all power supply modules are supplied by 3x400 VAC power by a supply network 301.

Each satellite module 340.1...6 includes at control unit 341.1...6, two supply terminals 342.1...6, 343.1...6, a charging connection 346.1...6, a first switch 344.1...6 in the connection between the first supply terminal 342.1...6 and the charging connection 346.1...6, and a second switch 345.1...6 in the connection between the second terminal 343.1...6 and the charging connection 346.1...6. The satellite module 340.1...6 further comprises an insulation monitoring device 347.1...6. Basically, the satellite module 340.1...6 allows for selectively connecting the first terminal 342.1...6 and/or the second terminal 343.1...6 with the charging connection 346.1...6, where the connections are connected in parallel of both switches 344.1...6, 345.1...6 are closed. The functioning of the components of the satellite module 340.1...6 is described in more detail below, in connection with Fig. 4.

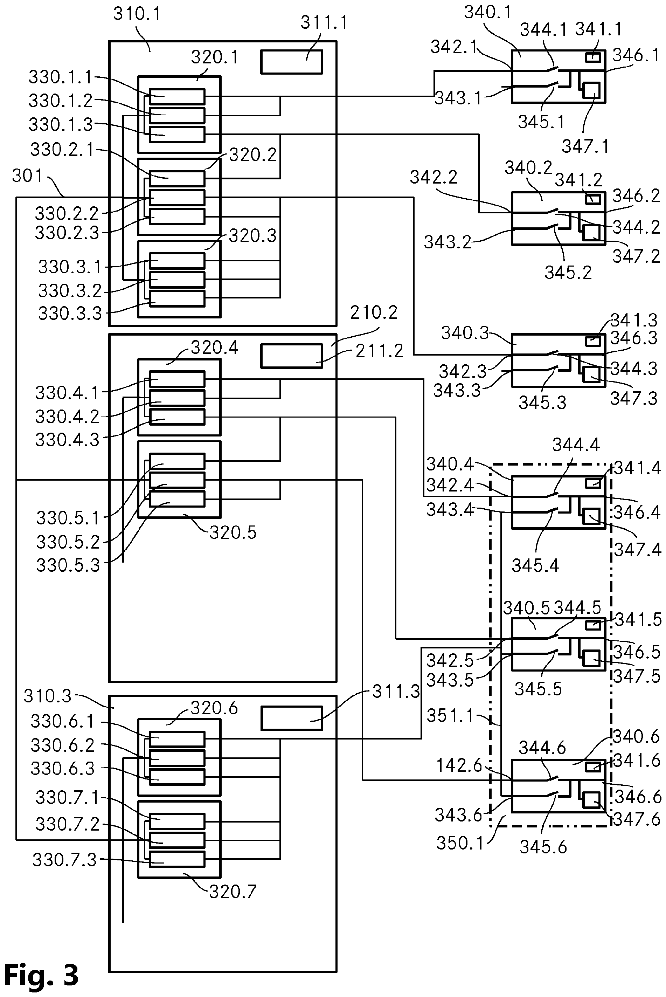

In the embodiment shown in Fig. 3, the power supply units 330.1.1...7.3 are connected to the satellite modules' supply terminals 342.1...6, 343.1...6 as follows:

| **Cabinet** | **Power Supply Unit** | **Power Supply Module** | **Satellite Module** | **Terminal** |
|---|---|---|---|---|
| 310.1 | 320.1 | 330.1.1 | 340.1 | 342.1 |
| | | 330.1.2 | | |
| | | 330.1.3 | 340.2 | 342.2 |
| | 320.2 | 330.2.1 | | |
| | | 330.2.2 | 340.3 | 342.3 |
| | | 330.2.3 | | |
| | 320.3 | 330.3.1 | | |
| | | 330.3.2 | | |
| | | 330.3.3 | | |
| 310.2 | 320.4 | 330.4.1 | 340.4 | 342.4 |
| | | 330.4.2 | | |
| | | 330.4.3 | 340.5 | 342.5 |
| | 320.5 | 330.5.1 | | |
| | | 330.5.2 | 340.6 | 342.6 |
| | | 330.5.3 | | |
| 310.3 | 320.6 | 330.6.1 | 330.4 | 343.4 |
| | | 330.6.2 | 330.5 | 343.5 |
| | | 330.6.3 | 330.6 | 343.6 |
| | 320.7 | 330.7.1 | | |
| | | 330.7.2 | | |
| | | 330.7.3 | | |

Accordingly, the second terminals 343.4, 343.5, 343.6 of the fourth, fifth and sixth satellite module 340.4, 340.5, 340.6 are connected to the same power supply modules 330.6.1...3, 330.7.1...3 by a DC bus 351.1 and constitute a single boost group 350.1.

Each of the power supply modules has a maximum supply power of 40 kW. The charging power that is made available at the six charging ports is as follows:

| **charging port** | **without boost** | **with boost** |
|---|---|---|
| 246.1 | 80 kW | *no boost available* |
| 246.2 | 80 kW | *no boost available* |
| 246.3 | 180 kW | *no boost available* |
| 246.4 | 80 kW | 320 kW |
| 246.5 | 80 kW | 320 kW |
| 246.6 | 80 kW | 320 kW |

Each of the power supply modules is a liquid cooled unit. They accept an AC input voltage of 400V and deliver a DC output voltage of 600 V. The output current at the maximum power of 40 kW is around 67 A, i. e. the connectors downstream of the modules are to be chosen to conduct corresponding currents. Three such units may be replaceably mounted in a frame to build a power supply unit. The cabinets have a 19' rack size and are prepared to accommodate up to three such units, i. e. a maximum of 9 power supply modules.

Suitable power supply modules are commercially available, e.g. the UR100040-LQ liquid cooling DC Charging Modules of Shenzhen UUGreenPower Co., Ltd, Shenzhen, China.

Figure 4 is a block diagram illustrating the control and communication within a charging system according to the invention. The layout is simplified, however the principles may be easily applied to the layouts according to Fig. 1-3 (and further layouts) of the charging system.

Several power supply modules 30.1, 30.2, 30.3, 30.4 are arranged in power supply units and cabinets 10 as described above. They are controlled by a central control unit 11 or several such control units. One of the power supply modules 30.1 supplies power to a first satellite module 40.1 through a first supply terminal 42.1 of this satellite module 40.1. Another of the power supply modules 30.4 supplies power to a second satellite module 40.2 through a first supply terminal 42.2 of this satellite module 40.2. A third power supply module 30.2 is connected in parallel to the second supply terminals 43.1, 43.2 of both satellite modules 40.1, 40.2.

The control unit 11 communicates with the control units 41.1, 41.2 of the satellite modules 40.1, 40.2. These control units 41.1, 41.2 of the satellite modules 40.1, 40.2 in turn communicate with the vehicles 2, 3 to be charged in a manner known as such and with a backend for charging management using the Open Charge Point Protocol (OCPP).

The satellite modules 40.1, 40.2 include an insulation monitoring device 47.1, 47.2 that continuously checks the minimum insulation resistance during the charging process. The vehicle-side insulation monitoring is deactivated during the charging process. The satellite modules 40.1, 40.2 further include a voltage sensor 48.1, 48.2 for measuring the voltage at the vehicle plug, the pantograph or a further contacting device providing the charging connector.

The supply terminals 42.1, 42.2, 43.1, 43.2 are 2-pole contactors for isolating the forward and return conductors to the vehicle. The switches 44.1, 44.2, 45.1, 45.2 are bipolar power switches, switching the connection of the respective supply terminal 42.1, 42.2, 43.1, 43.2 with the charging connection 46.1, 46.2 of the respective satellite module 40.1, 40.2.

Figure 5 is a block diagram illustrating the control and communication within a variant of a charging system according to the invention. Again, the layout is simplified, however the principles may be easily applied to the layouts according to Fig. 1-3 (and further layouts) of the charging system.

Several power supply modules 30.1, 30.2, 30.3, 30.4, 30.5 are arranged in power supply units and cabinets 10 as described above. They are controlled by a central control unit 11 or several such control units. One of the power supply modules 30.1 supplies power to a first satellite module 40.1' through a first supply terminal 42.1' of this satellite module 40.1'. Another of the power supply modules 30.4 supplies power to a second satellite module 40.2' through a first supply terminal 42.2' of this satellite module 40.2'. A third power supply module 30.2 and a fourth power supply module 30.5 are connected with each other, building a ring line. The second supply terminals 43.1', 43.2' of both satellite modules 40.1', 40.2' are connected to this ring line.

The control unit 11 communicates with the control units 41.1', 41.2' of the satellite modules 40.1', 40.2'. These control units 41.1', 41.2' of the satellite modules 40.1', 40.2' in turn communicate with the vehicles 2, 3 to be charged in a manner known as such and with a backend for charging management using the Open Charge Point Protocol (OCPP).

The satellite modules 40.1', 40.2' include an insulation monitoring device 47.1', 47.2' that continuously checks the minimum insulation resistance during the charging process. The vehicle-side insulation monitoring is deactivated during the charging process. The satellite modules 40.1', 40.2' further include a voltage sensor 48.1', 48.2' for measuring the voltage at the vehicle plug, the pantograph or a further contacting device providing the charging connector.

The supply terminals 42.1', 42.2', 43.1', 43.2' are 2-pole contactors for isolating the forward and return conductors to the vehicle. The switches 44.1', 44.2', 45.1', 45.2' are bipolar power switches. In contrast to the embodiment described in connection with Fig. 4, they are not arranged in parallel, but the first switches 44.1', 44.2' switch both connections between the respective supply terminal 42.1', 42.2', 43.1', 43.2' with the charging connection 46.1', 46.2' of the respective satellite module 40.1', 40.2'. The second switches 45.1', 45.2' switch the connection of the second supply terminal 43.1', 43.2' with a connection point connecting the respective line with the line connecting the first supply terminal 42.1', 42.2' with the first switch 44.1', 44.2', i. e. the second supply terminal 43.1', 43.2' is connected with the respective charging connection 46.1', 46.2' if both switches 44.1', 44.2', 45.1', 45.2' of the respective satellite module 40.1', 40.2' are closed.

It is important to note that the ring topology connecting two or more booster power supply modules and/or the alternative layout of switches in the satellite module may be applied to the layouts according to Fig. 1-3 (and further layouts) of the charging system.

The procedure for switching a given satellite module from standard charging mode to boost mode is described in the following.

The setup in standard charging mode is as follows:
- Communication is established between the vehicle 2 and the satellite module 40.1.
- The first switch 44.1 is closed.
- The permanently connected power supply module 20.1 supplies the vehicle 2 with energy.
- The second switch 45.1 is open.
- The vehicle is being charged.

After receiving a request to switch the satellite module 40.1 to boost mode, e.g. from the charging management or directly from a user, using a human-machine interface (HMI), the following steps are carried out:
1. The control unit 11 controlling at least the power supply modules 30.1...4 of the boost group of the satellite module 40.1 interlocks the second switches 45.1, 45.2 in all connected satellite modules of the given boost group.
2. The control unit 11 forwards the target values (voltage and power) from the satellite module 40.1 to the booster power supply unit 30.2. Initially, the required output current for the control unit controlling the booster power supply unit 30.2 is set to zero.
3. Now, the booster power supply unit 30.2 is ramped up to the desired voltage.
4. Now, the voltage across the second switch 45.1 is measured based on the voltage sensor 48.1 and the measured output voltage in the booster power supply unit 30.2.
5. If the measured voltage complies with the requirements, the second switch 45.1 is closed.

The invention is not restricted to the described embodiments. First of all, the number of satellite modules (and thus charging connections) and of power supply modules as well as their distribution to power supply units and cabinets may be different. The same applies to the connection layout of the booster circuit(s). The system may be supplied directly with DC power such that the power supply modules are essentially DC/DC converters. The indicated power values are mere examples. In principle, power supply units may be used that provide a higher or lower maximum power, or power supply units with different output power may be used within the same system.

In summary, it can be stated that the invention provides a charging system for electric vehicles that allows for a flexible distribution of charging power with simple switching components.

### List of reference signs

- 2: vehicle
- 3: vehicle
- 10: cabinet
- 11: control unit
- 30.1...4: power supply module
- 40.1...2: satellite module
- 40.1...2': satellite module
- 41.1...2: control unit
- 41.1...2': control unit
- 42.1...2: supply terminal
- 42.1...2': supply terminal
- 43.1...2: supply terminal
- 43.1...2': supply terminal
- 44.1...2: switch
- 44.1...2': switch
- 45.1...2: switch
- 45.1...2': switch
- 46.1...2: charging connection
- 46.1...2': charging connection
- 47.1...2: insulation monitoring device
- 47.1...2': insulation monitoring device
- 48.1...2: voltage sensor
- 48.1...2': voltage sensor
- 100: charging system
- 101: supply network
- 110.1...3: cabinet
- 111.1...3: control unit
- 120.1...8: power supply unit
- 130.1.1...130.8.3: power supply module
- 140.1...10: satellite module
- 141.1...10: control unit
- 142.1...10: supply terminal
- 143.1...10: supply terminal
- 144.1...10: switch
- 145.1...10: switch
- 146.1...10: charging connection
- 147.1...10: insulation monitoring device
- 150.1...2: boost group
- 151.1...2: DC bus
- 200: charging system
- 201: supply network
- 210.1...3: cabinet
- 211.1...3: control unit
- 220.1...7: power supply unit
- 230.1.1...130.7.3: power supply module
- 240.1...6: satellite module
- 241.1...6: control unit
- 242.1...6: supply terminal
- 243.1...6: supply terminal
- 244.1...6: switch
- 245.1...6: switch
- 246.1...6: charging connection
- 247.1...6: insulation monitoring device
- 250.1...3: boost group
- 251.1...3: DC bus
- 300: charging system
- 301: supply network
- 310.1...3: cabinet
- 311.1...3: control unit
- 320.1...7: power supply unit
- 330.1.1...130.7.3: power supply module
- 340.1...6: satellite module
- 341.1...6: control unit
- 342.1...6: supply terminal
- 343.1...6: supply terminal
- 344.1...6: switch
- 345.1...6: switch
- 346.1...6: charging connection
- 347.1...6: insulation monitoring device
- 350.1: boost group
- 351.1: DC bus

## Claims

1. Charging system for electric vehicles, comprising:
a) at least one satellite module group comprising a plurality of satellite modules, each satellite module providing a charging connection for a vehicle and each satellite module comprising at least two DC supply terminals which can be connected to or disconnected from the charging connection independently of one another by means of switching elements in the satellite module;
b) a plurality of power supply modules with power converters, for providing DC charging current,
wherein first power supply modules of a first group are each connected to exactly one first supply terminal of an associated satellite module, and
wherein second power supply modules of a second group are connected to a plurality of second supply terminals of a plurality of satellite modules,
so that at least one satellite module is connected via its first supply terminal to at least one of the first power supply modules and via its second supply terminal to at least one of the second power supply modules;
wherein
c) the charging system is controlled so that the connection between the second supply terminal and the charging connection is established for a maximum of one satellite module of the respective satellite module group;
d) at least one satellite module is supplied simultaneously by both power supply modules in the corresponding operating state and provides a maximum charging power that essentially corresponds to the sum of the two maximum charging powers of the first and second power supply modules.

2. The charging system according to claim 1, **characterized in that** each of the plurality of satellite modules is assigned to one satellite module group of a plurality of satellite module groups, wherein the second terminals of all satellite modules assigned to a given group are connected to respective of the second power supply modules in parallel, wherein the charging system is controlled so that the connection between the second supply terminal and the charging connection is established for a maximum of one satellite module per satellite module group.

3. The charging system according to claim 2, **characterized in that** at least two second power supply modules are connected to each other, creating a ring line, wherein at least two of the satellite modules are connected to the ring line.

4. The charging system according to one of claims 1 to 3, **characterized in that** at least one of the second supply terminals may be provided with a higher maximum charging power than each of the first supply terminals.

5. The charging system according to claim 4, characterized that the at least one of the second supply terminals may be provided a maximum charging power that is at least two times the maximum charging power provided to each of the first supply terminals.

6. The charging system according to any of claims 1 to 5, **characterized in that** each of the satellite modules comprises an insulation monitoring device for measuring an insulation resistance at the charging connection provided by the satellite module.

7. The charging system according to any of claims 1 to 6, **characterized in that** the switching elements of at least one of the satellite modules comprise at least two bipolar switches for selectively connecting or disconnecting the at least two DC supply terminals to the charging connection.

8. The charging system according to any of claims 1 to 7, **characterized in that** at least two of the plurality of power supply modules are mounted in a common power supply unit, wherein the power supply unit includes a mounting structure for the at least two power supply modules.

9. The charging system according to claim 8, **characterized in that** at least one first supply terminal of a satellite module power supply unit is connected in parallel to two power supply modules mounted in different power supply units.

10. A method for operating a charging system for electric vehicles, in particular a charging system as recited in any of claims 1 to 9, the method comprising a step of increasing a charging power supplied at a charging connection of a satellite module, a first supply terminal of the satellite module being connected to a first power supply module of a first group of power supply modules, the step comprising the substeps of:
d) checking whether a power supply module of a second group of power supply modules, being connected to a second supply terminal of the satellite module, is available;
e) if the module is available, starting up the available module until a predetermined voltage is provided;
f) closing a switching element in the satellite module connecting the second supply terminal of the satellite module to the charging connection of the satellite module.

11. The method as recited in claim 10, **characterized in that** in step b) the module is considered available if a present output current for the module is zero.
